# EUROPEAN PATENT SPECIFICATION

(11) **EP 4 613 351 B1**
(45) Date of publication and mention of the grant of the patent: **28.10.2026**
(21) Application number: 25159109.5
(22) Date of filing: 20.02.2025
(51) Int. Cl.: B01D 29/05, B01D 29/52, B01D 35/027

(54) **FILTER SYSTEM FOR FILTERING FLUIDS**
FILTERSYSTEM ZUM FILTERN VON FLUIDEN
SYSTÈME DE FILTRATION POUR FILTRER DES FLUIDES

(30) Priority: 04.03.2024 DE 102024106158
(43) Date of publication of application: 10.09.2025
(73) Proprietor: MANN+HUMMEL GmbH, 71636 Ludwigsburg (DE)
(72) Inventor: PANCHASHEELAN, Pradeep, 71636 Ludwigsburg (DE); MUNINARAYANAPPA, Shashank, 71636 Ludwigsburg (DE); RAJAGOPAL, Nandakumar, 71636 Ludwigsburg (DE); WAGNER, Claudia, 71636 Ludwigsburg (DE); HIRT, Markus, 71636 Ludwigsburg (DE); PAUL KALLUMGAL, Basil, 71636 Ludwigsburg (DE); YERAYAVAKKATH PRABHAKAR, Pravesh, 71636 Ludwigsburg (DE); JOHN, Juno, 71636 Ludwigsburg (DE); SANIVARAPU, Vishnuvardan Reddy, 71636 Ludwigsburg (DE); FAN, Haixia, 71636 Ludwigsburg (DE); BAUDITSCH, Peter, 71636 Ludwigsburg (DE)
(74) Representative: Mann + Hummel Intellectual Property

(56) References cited:
- EP-A1- 3 047 891
- JP-A- H11 319 436
- US-B2- 9 084 950

## Description

### Technical Field

The invention relates to a filter system for filtering fluids, in particular a liquid fluid filter system.

### Prior Art

The filter system relates to filters for filtering a liquid fluid, for instance in cooling systems or in transmission systems in internal combustion engines, hybrid and battery electric vehicles and includes electric axle filter solution in battery electric vehicles and new energy vehicles. Such systems use suction side filters located in a tank such as, for instance, an oil pan or placed between the oil pan and the oil pump. Usually, the inlet is connected or placed inside the oil pan and the outlet connected to the oil pump. The purpose of these filters firstly is to prevent damage of the suction pump from dirt or abrasives in the transmission or coolant oil and secondly to prevent damage to the gear mechanisms from the dirt or abrasives. These filters can be used standalone or in conjunction with a pressure side filter placed after the pump in a transmission oil system. Existing suction side filters traditionally use either a strainer or filter medium placed inside the housing. The housing is used to hold the media in such a manner that one face of the media/strainer receives the unfiltered oil from the inlet and the filtered oil that emerges from the other face of the media/strainer flows to the outlet. The filtration media can be comprised of multiple layers of media that have different filtration properties, and the media can be arranged within the housing in multiple ways.

EP 1994974 B1 describes an oil filter device which has an oil inlet and an oil outlet, wherein a suction oil pump can be connected to the oil outlet, with which a negative pressure can be generated between the oil inlet and the oil outlet, and has a coarse filter medium and a fine filter medium, which are arranged between the oil inlet and the oil outlet. The oil filter device is suitable for allowing a volume fraction of an oil penetrating through the oil inlet to pass permanently through the coarse filter medium and at the same time allowing the remaining volume fraction of the oil to pass through the fine filter medium, irrespective of the viscosity of the oil penetrating through the oil inlet. The fine filter medium is arranged upstream of the coarse filter medium in the flow direction. The fine filter medium is provided with at least one permanent opening through which oil can pass unfiltered. A clearance is provided between the fine filter medium and the coarse filter medium arranged behind it in the flow direction.

US 10,876,443 B2 describes a filter device for filtration of oil, comprising a first filtration layer, a second filtration layer, and a frame element, wherein the frame element is arranged in a sandwich-like manner between the first filtration layer and the second filtration layer. The frame element has a multitude of passage orifices, such that a number of intermediate chambers corresponding to the multitude of passage orifices is formed between the first filtration layer and the second filtration layer. The frame element comprises an oil-permeable filter medium, by means of which filtration of the oil passing therethrough is effected.

JP H11 319436 A displays an oil strainer which is constituted of a first filter member of a small mesh in which a sheet-shaped filter member is disposed between an oil inflow port and an oil outflow port is disposed in a streamline region from the oil inflow port toward the oil outflow port making the area large and a second filter member of a large mesh which is disposed outside the streamline region making the area small.

EP 3 047 891 shows a fluid filter apparatus comprising an upper housing shell and a lower housing shell. A pleat pack element comprising a peripheral frame and a folded pleated media. The frame is at least partially molded over the media to secure the media in the frame, and the media comprises two or more types of media of different densities from each other.

From US 9 084 950 B2 a fluid filter including is known with an upper case provided with an outlet hole and a lower case provided with an inlet hole. A filter element is held between the upper case and lower case, wherein the outlet hole and the inlet hole are arranged opposite to each other. The filter element includes a first filter material which is folded and arranged in a communication part connecting the outlet hole and the inlet hole, and a second filter material which is folded and spaced apart from the communication part, and the retention interval L1 of the first filter material in the fold line direction is smaller than the retention interval L2 of the second filter material in the fold line direction

### Disclosure of the Invention

It is an object of the invention to provide an improved filter system for filtering fluids, in particular a liquid fluid filter system.

According to an aspect of the invention the object is achieved by a filter system for filtering fluids, in particular a liquid fluid filter system, comprising a housing, a fluid inlet formed in a first housing part, a fluid outlet formed in a second housing part, a flat non-serviceable filter element being operably accommodated in the housing, a fluid flow passing transversely through the filter element from the fluid inlet to the fluid outlet, the filter element having at least two filtration areas of different filtration densities, the fluid flow passing the at least two filtration areas in parallel.

Advantageous embodiments are described in the dependent claims, the description and the drawings.

According to an aspect of the invention a filter system for filtering fluids, in particular a liquid fluid filter system, is proposed, comprising a housing, a fluid inlet formed in a first housing part, a fluid outlet formed in a second housing part, a flat non-serviceable filter element being operably accommodated in the housing, a fluid flow passing transversely through the filter element from the fluid inlet to the fluid outlet. The filter element has at least two filtration areas of different filtration densities, the fluid flow passing the at least two filtration areas in parallel.

The proposed filter system is a flat suction filter with non-pleated filter media for fluids like transmission oil and/or cooling medium such as oil or water glycole. In a first filtration area of the at least two filtration areas a filter medium or strainer with a high filtration density may be provided and in a second filtration area of the at least two filtration areas a filter medium or strainer with a low filtration density may be provided. Thus part of the fluid may flow through the first filtration area which offers a higher pressure resistance and another part of the fluid may flow through the second filtration area with a lower pressure resistance. Thus, on an average, the differential pressure caused by the filter system is lower than when providing only a high filtration density to the fluid flow, on the same time providing a sufficient filtration efficiency.

The filter medium with a low filtration density and the filter medium with a high filtration density can be arranged side by side establishing the two filtration areas.

Alternatively, the filter medium with a low filtration density and the filter medium with a high filtration density can be stacked one atop of the other in flow direction where the filter medium with a high filtration density has a cut-out exposing the filter medium with a low filtration density. The filter medium with a high filtration density can be arranged upstream of the filter medium with a low filtration density or vice versa.

Optionally, a filter medium with a low filtration density and a filter medium with a high filtration density can be arranged side by side establishing two filtration areas in a stack of filter media where a filter medium with a low filtration density and a filter medium with a high filtration density can be stacked one atop of the other in flow direction where the filter medium with a high filtration density has a cut-out exposing the filter medium with a low filtration density.

Advantageously, by using at least two filtration areas of different filtration densities, wherein the fluid flow passes the at least two filtration areas in parallel, the differential pressure caused by the suction filter for the fluid flow is reduced, where space and cost considerations prevent the use of a conventional mechanical bypass valve.

According to a favorable embodiment of the filter system, a first filtration area with a high filtration density may be larger than a second filtration area with a low filtration density. In particular, the first filtration area with the high filtration density may be larger, preferably at least twice as large, more preferably at least three times larger, most preferably at least four times larger, than the second filtration area with the low filtration density. Thus, a sufficient filtration quality may be achieved by simultaneously reducing the differential pressure over the filter system in an advantageous way.

According to a favorable embodiment of the filter system, the filter element may at least comprise one first filter medium with the high filtration density and one second filter medium with the low filtration density. One first filter medium for fine filtration and one second filter medium for coarse filtration may advantageously be arranged in the housing of the filter system for achieving a first filtration area with a high filtration density and a second filtration area with a low filtration density thus reducing the differential pressure for the fluid passing the filter element in total.

According to the invention of the filter system, the first filter medium and the second filter medium are arranged side by side transversely to the fluid flow. Thus, a first part of the fluid, entering the housing through the fluid inlet and passing through the first filter medium is fine filtered and a second part of the fluid, entering the housing through the fluid inlet and passing through the second filter medium is coarse filtered. Both parts of the fluid leave the housing after being filtered through the fluid outlet. The fluid inlet and/or fluid outlet can comprise several apertures.

According to the invention of the filter system, a first divider is arranged in the first housing part upstream of the filter element between the first filter medium and the second filter medium and a second divider is arranged in the second housing part downstream of the filter element, the second divider being positioned opposite to the first divider relative to the filter element. The first divider and the second divider each are provided with at least one flow channel for fluid passing between the first and the second filtration area of the filter element.

The first and second dividers offer a possibility for partitioning the fluid flow, for supporting and sealing the first and second filter medium against each other. In particular, the dividers are arranged at both sides of an interface between the two filtration areas.

Fluid that enters the housing through the fluid inlet in the first housing part has multiple paths to take. Firstly, there exists a fluid flow through the fine first filter medium and then to the fluid outlet in the second housing part. Else, the fluid can pass through one or more flow channels of the first divider, then through the coarse second filter medium with the low filtration density, next pass through the at least one flow channel of the second divider to the fluid outlet. When fluid flows through the filter system, the portion of fluid flow passing through the different filter media dynamically changes with variations in viscosity with the help of the first and second divider and flow resistance offered by the first and second filter media to the fluid flow.

The fluid flow passing through the at least one flow channel of the first and second divider to a major part may be streaming parallel to the filter element.

This embodiment offers a combination of divider mechanisms with the first and second filter medium that have different resistances to fluid flow. This combination allows for a dynamic change of amount of fluid flowing through the first and second filter medium when the fluid viscosity changes, for instance depending on a temperature of the fluid.

According to a favorable embodiment of the filter system, the fluid inlet may be positioned in the first housing part and the fluid outlet may be positioned in the second housing part, in particular opposing the first filtration area with the high filtration density. Thus, the major part of the fluid entering the first housing part may directly stream through the first filter medium, being fine filtered, and after passing the first filter medium streaming directly to the fluid outlet in the second housing part.

According to a favorable embodiment of the filter system, the first divider may be arranged in the first housing part and/or the second divider may be arranged in the second housing part. Additionally or alternatively, the first divider may be an integral part of the first housing part and/or the second divider may be an integral part of the second housing part. The first divider may be fixed to the first housing part and the second divider may be fixed to the second housing part, e.g. by gluing or welding or the like for achieving a durable fixation to the first and second housing part.

According to a favorable embodiment of the filter system, the first divider and/or the second divider may be provided with holding means for fixing the filter element, in particular for clamping the filter element between the dividers. Thus, the filter element may be fixed and supported between the first and second divider. The first and second divider may even fix and tightly seal the interface between the first and second filter medium. The filter element for example can be clamped, welded, glued or pressed between/to the dividers.

According to a favorable embodiment of the filter system, the first filter medium and the second filter medium may be stacked atop of each other, wherein the first filter medium with a high filtration density may be provided with a cut-out for exposing the second filtration area with a low filtration density to the fluid flow. In particular, the cut-out may be located on a circumferential edge of the first filter medium so that the cut-out is only partially surrounded by the first filter medium with a high filtration density.

In this alternative embodiment a filtration media stack may be provided that has two or more distinct layers. In one embodiment, the layers may be arranged in a manner that the resistance to fluid flow decreases in the direction of the fluid flow. A portion of the filter media stack is cut-out, in particular at the circumferential edge of the stack, in such a manner that if the fluid is to flow through this portion it would only flow through one or more filter media layers with lower resistance to fluid flow than in other areas of the filter element. Optionally, there can be one or more cut-outs positioned freely on the circumferential edges of the filter medium stack.

Fluid that enters the housing through the fluid inlet in the first housing part has multiple paths it can take. The fluid can flow through the complete filter media stack, then to the fluid outlet in the second housing part. Else, it can flow through the one or more cut-outs in the filter element, through one or more filter media layers with lower resistance to fluid flow and then to the fluid outlet. When fluid flows through the filter system, the portion of fluid flow passing through the filter media stack dynamically changes with changes in viscosity with the help of the one or more cut-outs. The at least one cut-out may be characterized by absence of filter media having higher resistance to fluid flow.

In particular, the first filter medium with the high filtration density may be arranged upstream of the second filter medium with the low filtration density or, alternatively, the first filter medium with the high filtration density may be arranged downstream of the second filter medium with the low filtration density.

According to a favorable embodiment of the filter system, ribs may be arranged on an inside of the first housing part and/or on an inside of the second housing part for directing the fluid flow and/or as a support of the filter element. Thus, the filter element may be supported mainly against pressure of the flowing fluid and/or to compensate for mechanical vibrations. The ribs may advantageously also serve for distributing and guiding the incoming or outgoing fluid over the surface of the filter element.

According to a favorable embodiment of the filter system, a gap may be provided in flow direction between the ribs and the filter element. Thus, it may be ensured that the filter medium is not damaged by mechanical pressure by the ribs.

According to a favorable embodiment of the filter system, recesses may be provided on an outer circumference of the first housing part and corresponding protrusions may be provided on an outer circumference of the second housing part or vice versa for positioning the first housing part and the second housing part relative to each other. In particular, a poka yoke positioning of the first housing part and the second housing part relative to each other can be achieved. Advantageously, mounting of the first housing part to the second housing part may be facilitated by the recesses and corresponding protrusions in the first and second housing part. In this way the position of the fluid inlet upstream a desired filtration area of the filter element can be ensured. Likewise, the position of the fluid outlet downstream a desired filtration area of the filter element can be ensured.

According to a favorable embodiment of the filter system, an outer circumference of the filter element may be fixed to the first housing part and/or the second housing part, in particular by gluing or welding or clamping. As the filter element is preferably configured as a non-serviceable filter element it may advantageously be fixed in a durable way to the first and/or second housing part, thus sealing the filter element to the housing as well as mechanically stabilizing against vibrations during operation.

According to a favorable embodiment of the filter system, the first filter medium and/or the second filter medium may be of a single layer medium type. Alternatively, the first filter medium and/or the second filter medium may be of a multilayer medium type. Thus, the first and second filter media may comprise conventional non-pleated filter media or strainers used for filtering fluids like transmission oil or cooling liquid.

### Brief Description of the Drawings

The present invention together with the above-mentioned and other objects and advantages may best be understood from the following detailed description of the embodiments, but not restricted to the embodiments, wherein is shown in:
- Figure 1: an exploded view of a filter system for filtering fluids, in particular a liquid fluid filter system, according to an embodiment of the invention;
- Figure 2: a detailed view of a divider of the filter system according to Fig. 1;
- Figure 3: a sectional view of the filter system according to Fig. 1;
- Figure 4: another sectional view of the filter system according to Fig. 1;
- Figure 5: an exploded view of a filter system according to another embodiment of the invention; and
- Figure 6: a sectional view of the filter system according to Fig. 5.

### Detailed Description of the Drawings

In the drawings, like elements are referred to with equal reference numerals. The drawings are merely schematic representations, not intended to portray specific parameters of the invention. Moreover, the drawings are intended to depict only typical embodiments of the invention and therefore should not be considered as limiting the scope of the invention.

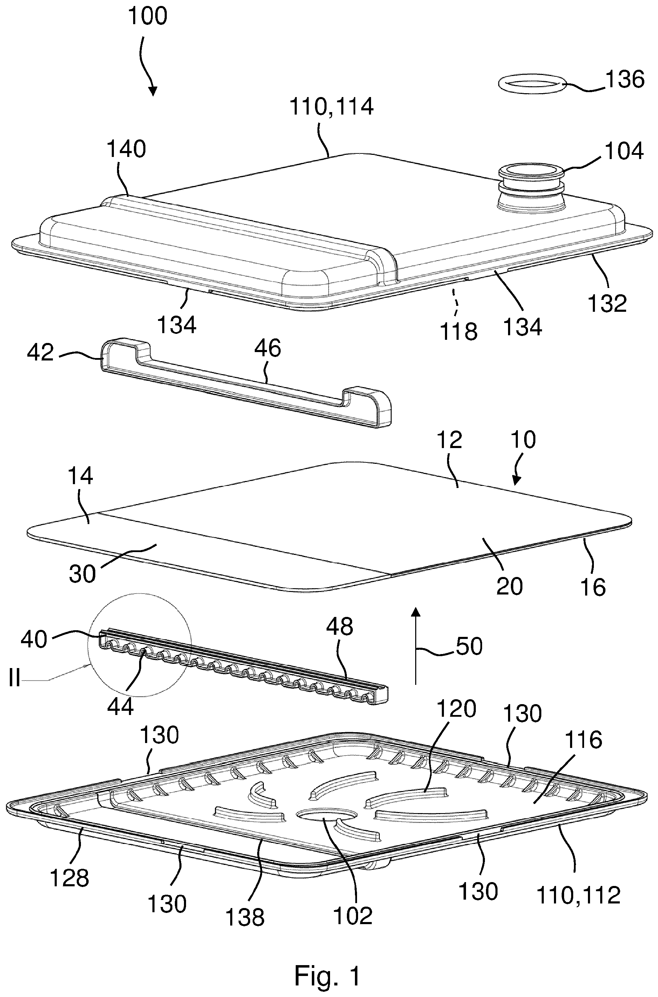

Figure 1 depicts an exploded view of a filter system for filtering fluids, in particular a liquid fluid filter system, according to an embodiment of the invention. The filter system 100 is a flat suction filter with non-pleated filter media 20, 30 for fluids like transmission oil and/or cooling oil.

The filter system 100 comprises a housing 110 with a first housing part 112 and a second housing part 114. A fluid inlet 102 is located in the first housing part 112, and a fluid outlet 104 is located in the second housing part 114. A flat non-serviceable filter element 10 is operably accommodated in the housing 110, such that a fluid flow 50 can pass from the fluid inlet 102 through the filter element 10 to the fluid outlet 104.

The filter element 10 has a flat body with two filtration areas 12, 14 of different filtration densities arranged side by side in the flat body. The fluid flow 50 passes the two filtration areas 12, 14 in parallel.

The first filtration area 12 with a high filtration density is larger than the second filtration area 14 with a low filtration density. In particular, the first filtration area 12 with the high filtration density may be at least twice as large, more preferably at least three times larger, or most preferably at least four times larger than the second filtration area 14 with the low filtration density. In the embodiment shown in Figure 1 the first filtration area 12 is approximately three times larger than the second filtration area 14.

In the first filtration area 12 the filter element 10 comprises a first filter medium 20 with the high filtration density and in the second filtration area 14 a second filter medium 30 with the low filtration density. The first filter medium 20 and/or the second filter medium 30 may be of single layer medium type or multilayer medium type. The first filter medium 20 and/or the second filter medium 30 can also be realized as strainers.

The first filter medium 20 and the second filter medium 30 are arranged side by side transversely to the fluid flow 50

A first divider 40 is arranged in the first housing part 112 upstream of the filter element 10 between the first filter medium 20 and the second filter medium 30 and a second divider 42 is arranged in the second housing part 114 downstream of the filter element 10. The second divider 42 is hereby positioned opposite to the first divider 40, relative to the filter element 10. The dividers 40, 42 are located beneath and above the interface between the first and second filter medium 20, 30, respectively.

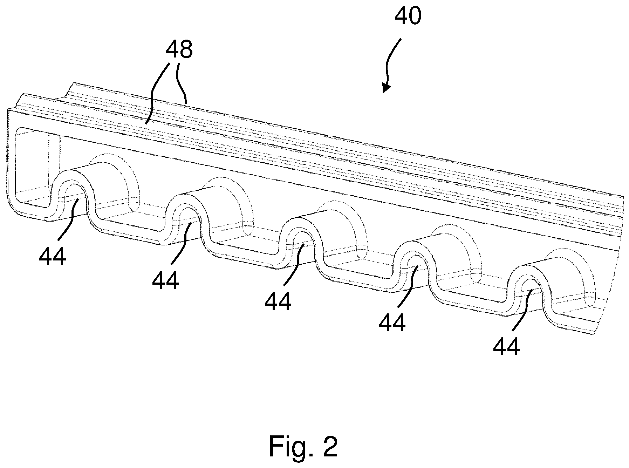

The first divider 40, which is shown in detail in Figure 2, is provided with a number flow channels 44 parallel to the filter element 10. The second divider 42 is provided with one broad flow channel 46. The flow channels 44, 46 let the fluid pass between the first and the second filtration area 12, 14 of the filter element 10. Besides the filtration densities of the filter media 20, 40, the respective cross sections of the areas of the flow channels 44, 46 can be used for defining a pressure difference between the filtration areas 12, 14 of the filter element.

As may be seen from Figure 1, the fluid inlet 102 is positioned in the first housing part 112 and the fluid outlet 104 is positioned in the second housing part 114, fluid inlet 102 as well as fluid outlet 104 opposing the first filtration area 12 with the high filtration density.

The first divider 40 may be arranged in the first housing part 112 and the second divider 42 may be arranged in the second housing part 114 and fixed to the housing parts 112, 114 e.g. by gluing or welding. For this purpose, the first housing part 112 as well as the second housing part 114 are provided with recesses 138, 140 to accommodate and fix the dividers 40, 42 on the inside 116, 118 of the first and second housing part 112, 114.

Alternatively, the first divider 40 may be an integral part of the first housing part 112 and/or the second divider 42 may be an integral part of the second housing part 114.

The first divider 40 is provided with holding means 48 for fixing the filter element 10, in particular for clamping the filter element 10 between the dividers 40, 42. Thus, the filter element 10 may be fixed and supported between the first and second divider 40, 42. The first and second divider 40, 42 may even fix and tightly seal the division line between the first and second filter medium 20, 30.

Fluid that enters the housing 110 through the fluid inlet 102 in the first housing part 112 has multiple paths to take. Firstly, there exists a fluid flow through the fine first filter medium 20 of the first filtration area 12 and then to the fluid outlet 104 in the second housing part 114. Else, the fluid can pass through one or more flow channels 44 of the first divider 40, then through the coarse second filter medium 30 in the second filtration area 14, next pass through the flow channel 46 of the second divider 42 to the fluid outlet 104.

Advantageously, by using the two filtration areas 12, 14 of different filtration densities, wherein the fluid flow passes the two filtration areas 12, 14 in parallel, the differential pressure that the suction filter offers to the flow of fluid is reduced.

In Figure 2 a detailed view of the first divider 40 of the filter system 100 is depicted.

The number of flow channels 44 for passing the fluid between the first filtration area 12 and the second filtration area 14 may be recognized. The flow channels 44 are realized as indents in the body of the divider 40. The holding means 48 on the upper side of the divider 40 are realized as two rails extending along a length of the divider.

A gasket 136, e.g. an O-ring, may serve for sealing the fluid outlet 104 to a fluid duct or a fluid pump.

As may be seen from Figure 1, ribs 120 are arranged on an inside 116 of the first housing part 112 for directing the fluid flow 50 and/or as a support of the filter element 10.

Ribs 122 are also arranged on an inside 118 the second housing part 114, but are not to be seen in Figure 1.

Thus, the filter element 10 may be supported mainly against pressure of the flowing fluid and/or to compensate for mechanical vibrations or deformation. The ribs 120, 122 may advantageously also serve for distributing and guiding the incoming or outgoing fluid over the surface of the filter element 10.

Recesses 130 are provided on an outer circumference 128 of the first housing part 112 and corresponding protrusions 134 are provided on an outer circumference 132 of the second housing part 114 for positioning the first housing part 112 and the second housing part 114 relative to each, in particular for poka yoke positioning the first housing part 112 and the second housing part 114 relative to each other.

Alternatively, recesses 130 may be provided in the second housing part 114 whereas corresponding protrusions 134 may be provided in the first housing part 112.

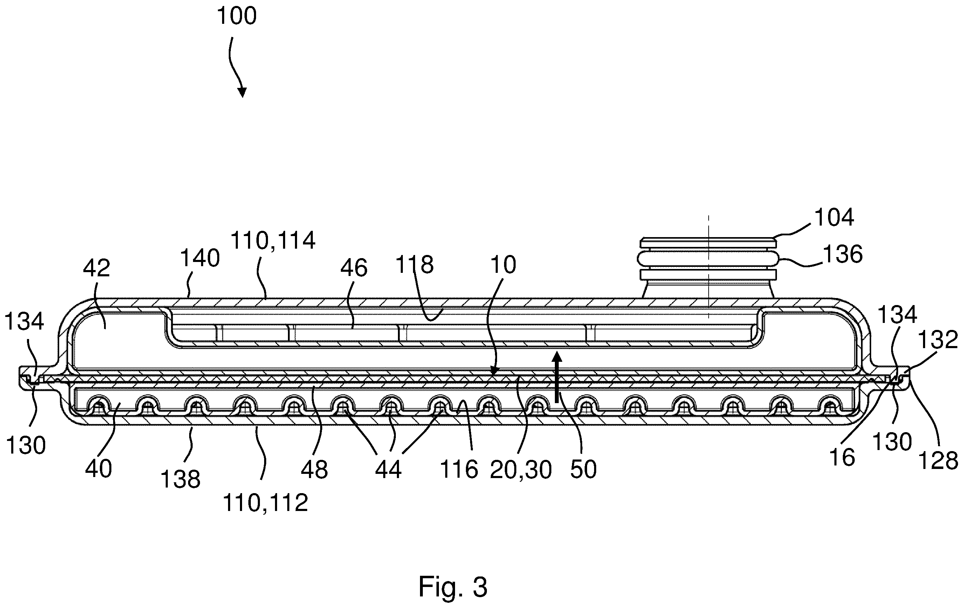

Figure 3 shows a sectional view of the filter system 100 in a section plane through the dividers 40, 42.

The dividers 40, 42 are positioned in their corresponding recesses 138, 140 of the first and second housing parts 112, 114. The filter element 10 is clamped between the dividers 40, 42, in particular by means of the holding means, 48 of the first divider 40, pressing the filter element 10 against the second divider 42.

An outer circumference 16 of the filter element 10 is fixed to the first housing part 112 and the second housing part 114 and clamped between the first housing part 112 and the second housing part 114. Additionally the filter element 10 may be fixed by gluing or welding to the first and second housing part 112, 114.

The indents of the flow channels 44 of the first divider 40 are pressed against the inside 116 of the first housing part 112. The indent of the flow channel 46 of the second divider 42 is pressed against the inside 118 of the second housing part 114. Thus, the fluid may pass through the first flow channels 44 from the fluid inlet 102 to the second filtration area 14 and after being filtered in the second filtration area 14 back from the second filtration area 14 to the fluid outlet 104.

Cooperation of protrusions 134 and corresponding recesses 130 for mounting the first and the second housing parts 112, 114 is depicted at the outer circumference 128 of the housing 110.

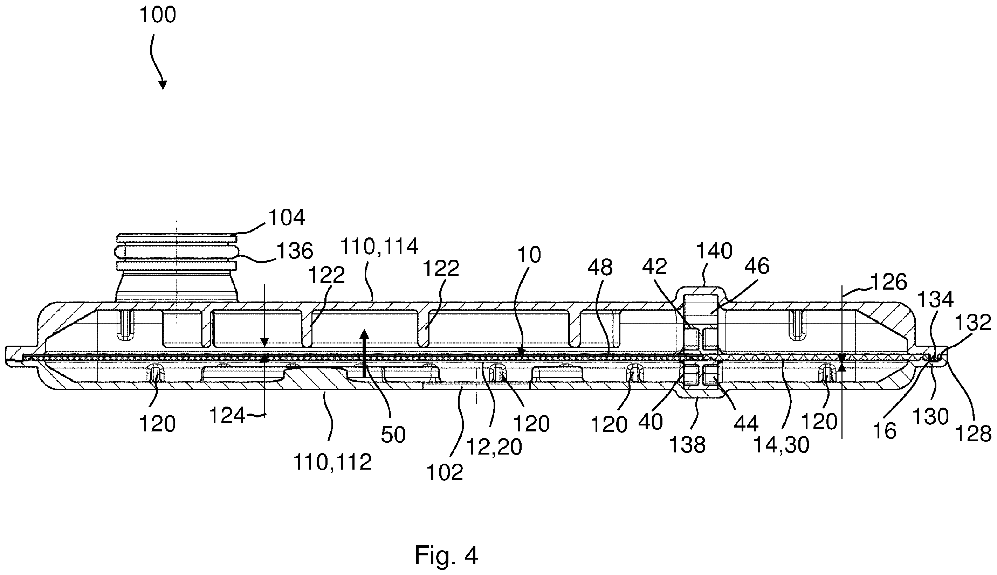

In Figure 4 another sectional view of the filter system 100 in a section plane of 90° against the section plane of Figure 3 is depicted. The fluid inlet 102 as part of the first housing part 112 is cut. The fluid outlet 104 is depicted in a side view.

In this view the first and the second divider 40, 42 are cut across.

The first filter medium 20 and the second filter medium 30 forming the filter element 10 in the first filtration area 12 and the second filtration area 14 are fixed on the outer circumference 16 of the filter element 10 by being clamped by the first and second housing parts 112, 114 and/or additionally glued or welded to the first and/or second housing part 112, 114, and further by being clamped between the first and second divider 40, 42.

Further, the filter element 10 is supported by the ribs 120, 122 on the inside 116, 118 of the first and second housing part 112, 114 across the surface of the filter element 10.

Gaps 124, 126 are provided in flow direction 50 between the ribs 120, 122 and the filter element 10. Thus, it may be ensured that the filter medium 20, 30 is not damaged by mechanical pressure by the ribs 120, 122.

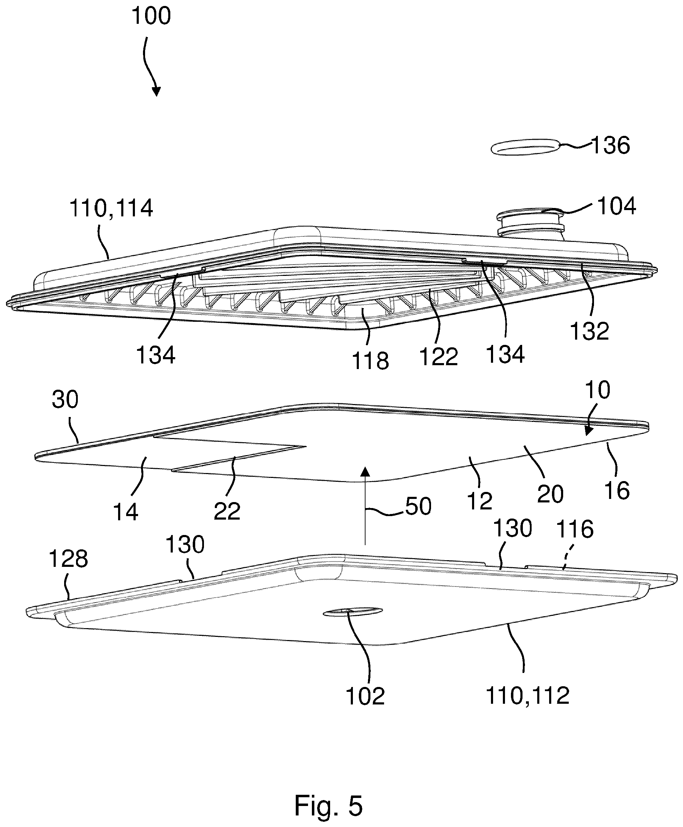

Figure 5 depicts an exploded view of a filter system 100 according to another embodiment of the invention with an alternative configuration of the filter element 10.

In this embodiment, the first filter medium 20 and the second filter medium 30 are stacked atop of each other. The first filter medium 20 with a high filtration density is provided with a cut-out 22 for exposing the second filtration area 14 with a low filtration density to the fluid flow. In this embodiment, the exposed surface of the second filter medium 40 is arranged downstream of the fluid flow 50

In this alternative embodiment the filtration media stack may be provided that has two distinct layers of first and second filter medium 20, 30. The layers are arranged in a manner that the resistance to fluid flow decreases in the direction of the fluid flow 50. A portion of the filter media stack is cut-out, in such a manner that if the fluid is to flow through this portion it would only flow through one filter medium layer with lower resistance to fluid flow. There can be one or more cut-outs 22 positioned freely on the circumferential edges 16 of the filter medium stack. The cut-out 22 is only partially surrounded by the first filter medium 20 with the high filtration density.

In the embodiment shown in Figure 5, the first filter medium 20 with the high filtration density is arranged upstream of the second filter medium 30 with the low filtration density. In an alternative embodiment the first filter medium 20 with the high filtration density may be arranged downstream of the second filter medium 30 with the low filtration density.

Fluid that enters the housing 110 through the fluid inlet 102 in the first housing part 112, has multiple paths it can take. Firstly, the fluid flow through the complete filter media stack of first and second filter medium 20, 30 in the first filtration area 12, then to the fluid outlet 104 in the second housing part 114. Else, it can flow through the cut-out 22 of the second filtration area 14, through the second filter medium 30 with lower resistance to fluid flow and then to the fluid outlet 104.

Advantageously, by using the two filtration areas 12, 14 of different filtration densities, wherein the fluid flow passes the two filtration areas 12, 14 in parallel, the differential pressure that the suction filter offers to the flow of fluid is reduced.

Recesses 130 are provided on an outer circumference 128 of the first housing part 112 and corresponding protrusions 134 are provided on an outer circumference 132 of the second housing part 114 for positioning the first housing part 112 and the second housing part 114 relative to each, in particular for poka yoke positioning the first housing part 112 and the second housing part 114 relative to each other.

Alternatively, recesses 130 may be provided in the second housing part 114 whereas corresponding protrusions 134 may be provided in the first housing part 112.

The arrangement of ribs 120, 122 on the inside 116, 118 of the first and second housing part 112, 114 is similar to the embodiment shown in Figures 1 to 4, so that ribs 120 are arranged on an inside 116 of the first housing part 112 for directing the fluid flow 50 and/or as a support of the filter element 10, but are not to be seen in Figure 5.

Ribs 122 are also arranged on an inside 118 of the second housing part 114,

Thus, the filter element 10 may be supported mainly against pressure of the flowing fluid and/or to compensate for mechanical vibrations or deformation. The ribs 120, 122 may advantageously also serve for distributing and guiding the incoming or outgoing fluid over the surface of the filter element 10.

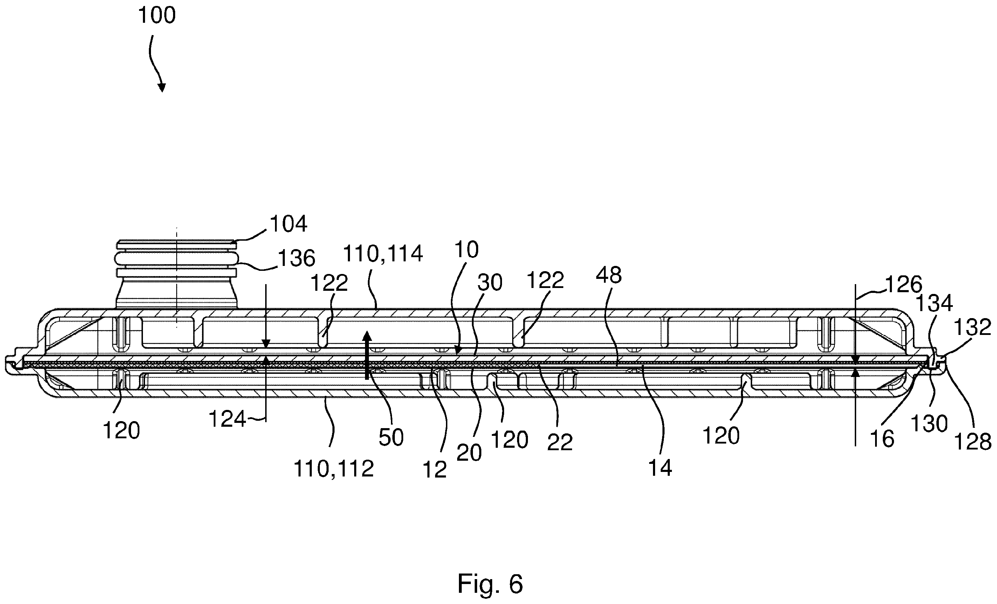

Figure 6 depicts a sectional view of the filter system 100 according to Figure 5.

The section plane is chosen as to cut through an area where the cut-out 22 of the first filter medium 20 is to be seen. In the first filtration area 12 the stack of both filter media 20, 30 is to be seen, the fluid first passing the first filter medium 20 and then the second filter medium 30. In the second filtration area 14 the fluid passed only the second filter medium 30.

The arrangement of ribs 120, 122 on the inside 116, 118 of the first and second housing part 112, 114 is supporting the filter element 10.

### Reference numerals

- 10: filter element
- 12: first filtration area
- 14: second filtration area
- 16: outer circumference
- 20: first filter medium
- 22: cut-out
- 30: second filter medium
- 40: first divider
- 42: second divider
- 44: flow channel
- 46: flow channel
- 48: holding means
- 50: fluid flow
- 100: filter system
- 102: fluid inlet
- 104: fluid outlet
- 110: housing
- 112: first housing part
- 114: second housing part
- 116: inside
- 118: inside
- 120: rib
- 122: rib
- 124: gap
- 126: gap
- 128: outer circumference
- 130: recess
- 132: outer circumference
- 134: protrusion
- 136: gasket
- 138: recess
- 140: recess

## Claims

1. A filter system (100) for filtering fluids, in particular a liquid fluid filter system, comprising
a housing (110), at least one fluid inlet (102) formed in a first housing part (112), at least one fluid outlet (104) formed in a second housing part (114),
a flat non-serviceable filter element (10) being operably accommodated in the housing (110), a fluid flow (50) passing transversely through the filter element (10) from the fluid inlet (102) to the fluid outlet (104),
the filter element (10) having at least two filtration areas (12, 14) of different filtration densities, the fluid flow (50) passing the at least two filtration areas (12, 14) in parallel, **characterized in that** the first filter medium (20) and the second filter medium (30) are arranged side by side transversely to the fluid flow (50), wherein a first divider (40) is arranged in the first housing part (112) upstream of the filter element (10) between the first filter medium (20) and the second filter medium (30) and a second divider (42) is arranged in the second housing part (114) downstream of the filter element (10), the second divider (42) being positioned opposite to the first divider (40), relative to the filter element (10), wherein the first divider (40) and the second divider (42) each are provided with at least one flow channel (44, 46) for fluid passing between the first and the second filtration area (12, 14) of the filter element (10).

2. The filter system to claim 1, wherein a first filtration area (12) with a high filtration density is larger than a second filtration area (14) with a low filtration density,
in particular, wherein the first filtration area (12) with the high filtration density is larger, preferably at least twice as large, more preferably at least three times larger, most preferably at least four times larger, than the second filtration area (14) with the low filtration density.

3. The filter system according to claim 1 or 2, wherein the filter element (10) at least comprises one first filter medium (20) with the high filtration density and one second filter medium (30) with the low filtration density.

4. The filter system according to one of the preceding claims, wherein the fluid inlet (102) is positioned in the first housing part (112) and the fluid outlet (104) is positioned in the second housing part (114), in particular opposing the first filtration area (12) with the high filtration density.

5. The filter system according to any one of the preceding claims, wherein the first divider (40) is arranged in the first housing part (112) and/or the second divider (42) is arranged in the second housing part (114), and/or
the first divider (40) is an integral part of the first housing part (112) and/or the second divider (42) is an integral part of the second housing part (114).

6. The filter system according to any one of the preceding claims, wherein the first divider (40) and/or the second divider (42) are provided with holding means (48) for fixing the filter element (10), in particular for clamping the filter element (10) between the dividers (40, 42).

7. The filter system according to claim 3, wherein the first filter medium (20) and the second filter medium (30) are stacked atop of each other, wherein the first filter medium (20) with a high filtration density is provided with a cut-out (22) for exposing the second filtration area (14) with a low filtration density to the fluid flow (50).

8. The filter system according to any one of the preceding claims, wherein ribs (120, 122) are arranged on an inside (116) of the first housing part (112) and/or on an inside (118) of the second housing part (114) for directing the fluid flow (50) and/or as a support of the filter element (10).

9. The filter system according to claim 8, wherein a gap (124, 126) is provided in flow direction (50) between the ribs (120, 122) and the filter element (10).

10. The filter system according to any one of the preceding claims, wherein recesses (130) are provided on an outer circumference (128) of the first housing part (112) and corresponding protrusions (134) are provided on an outer circumference (132) of the second housing part (114) or vice versa for positioning the first housing part (112) and the second housing part (114) relative to each, other,
in particular for poka yoke positioning the first housing part (112) and the second housing part (114) relative to each other.

11. The filter system according to any one of the preceding claims, wherein an outer circumference (16) of the filter element (10) is fixed to the first housing part (112) and/or the second housing part (114), in particular by gluing, welding or clamping.

12. The filter system according to any one of the preceding claims, wherein the first filter medium (20) and/or the second filter medium (30) are of single layer medium type or multilayer medium type.

## Patentansprüche

1. Filtersystem (100) zum Filtern von Fluiden, insbesondere ein Filtersystem für flüssige Fluide , umfassend
ein Gehäuse (110), mindestens einen in einem ersten Gehäuseteil (112) ausgebildeten Fluideinlass (102), mindestens einen in einem zweiten Gehäuseteil (114) ausgebildeten Fluidauslass (104),
ein flaches, wartungsfreies Filterelement (10), das funktionsfähig im Gehäuse (110) aufgenommen ist, wobei ein Fluidstrom (50) quer durch das Filterelement (10) vom Fluideinlass (102) zum Fluidauslass (104) strömt,
wobei das Filterelement (10) mindestens zwei Filtrationsbereiche (12, 14) mit unterschiedlichen Filtrationsdichten aufweist, wobei der Fluidstrom (50) die mindestens zwei Filtrationsbereiche (12, 14) parallel durchströmt, **dadurch gekennzeichnet, dass** das erste Filtermedium (20) und das zweite Filtermedium (30) nebeneinander quer zum Fluidstrom (50) angeordnet sind, wobei im ersten Gehäuseteil (112) stromaufwärts des Filterelements (10) zwischen dem ersten Filtermedium (20) und dem zweiten Filtermedium (30) eine erste Trennwand (40) und im zweiten Gehäuseteil (114) stromabwärts des Filterelements (10) eine zweite Trennwand (42) angeordnet ist, wobei die zweite Trennwand (42) relativ zum Filterelement (10) gegenüber der ersten Trennwand (40) positioniert ist, wobei die erste Trennwand (40) und die zweite Trennwand (42) jeweils mit mindestens einem Strömungskanal (44, 46) für den Durchfluss von Fluid zwischen dem ersten und dem zweiten Filtrationsbereich (12, 14) des Filterelements (10) versehen sind.

2. Filtersystem nach Anspruch 1, wobei ein erster Filtrationsbereich (12) mit hoher Filtrationsdichte größer ist als ein zweiter Filtrationsbereich (14) mit geringer Filtrationsdichte,
wobei insbesondere der erste Filtrationsbereich (12) mit der hohen Filtrationsdichte größer, vorzugsweise mindestens doppelt so groß, noch bevorzugter mindestens dreimal so groß, am meisten bevorzugt mindestens viermal so groß ist wie der zweite Filtrationsbereich (14) mit der niedrigen Filtrationsdichte.

3. Filtersystem nach Anspruch 1 oder 2, wobei das Filterelement (10) mindestens ein erstes Filtermedium (20) mit der hohen Filtrationsdichte und ein zweites Filtermedium (30) mit der niedrigen Filtrationsdichte umfasst.

4. Filtersystem nach einem der obigen Ansprüche, wobei der Fluideinlass (102) im ersten Gehäuseteil (112) und der Fluidauslass (104) im zweiten Gehäuseteil (114) angeordnet ist, insbesondere gegenüber dem ersten Filtrationsbereich (12) mit der hohen Filtrationsdichte.

5. Filtersystem nach einem der obigen Ansprüche, wobei die erste Trennwand (40) im ersten Gehäuseteil (112) und/oder die zweite Trennwand (42) im zweiten Gehäuseteil (114) angeordnet ist, und/oder
die erste Trennwand (40) ein integraler Bestandteil des ersten Gehäuseteils (112) ist und/oder die zweite Trennwand (42) ein integraler Bestandteil des zweiten Gehäuseteils (114) ist.

6. Filtersystem nach einem der obigen Ansprüche, wobei die erste Trennwand (40) und/oder die zweite Trennwand (42) mit Haltevorrichtungen (48) zur Befestigung des Filterelements (10), insbesondere zum Einklemmen des Filterelements (10) zwischen den Trennwänden (40, 42), versehen sind.

7. Filtersystem nach Anspruch 3, wobei das erste Filtermedium (20) und das zweite Filtermedium (30) übereinander gestapelt sind, wobei das erste Filtermedium (20) mit hoher Filtrationsdichte mit einem Ausschnitt (22) versehen ist, um den zweiten Filtrationsbereich (14) mit niedriger Filtrationsdichte dem Fluidstrom (50) auszusetzen.

8. Filtersystem nach einem der obigen Ansprüche, wobei Rippen (120, 122) an einer Innenseite (116) des ersten Gehäuseteils (112) und/oder an einer Innenseite (118) des zweiten Gehäuseteils (114) angeordnet sind, um den Fluidstrom (50) zu lenken und/oder als Stütze für das Filterelement (10) zu dienen.

9. Filtersystem nach Anspruch 8, wobei in Strömungsrichtung (50) zwischen den Rippen (120, 122) und dem Filterelement (10) ein Spalt (124, 126) vorgesehen ist.

10. Filtersystem nach einem der obigen Ansprüche, wobei an einem Außenumfang (128) des ersten Gehäuseteils (112) Aussparungen (130) und am Außenumfang (132) des zweiten Gehäuseteils (114) entsprechende Vorsprünge (134) vorgesehen sind oder umgekehrt, um das erste Gehäuseteil (112) und das zweite Gehäuseteil (114) relativ zueinander zu positionieren, insbesondere zur Poka-Yoke-Positionierung des ersten Gehäuseteils (112) und des zweiten Gehäuseteils (114) relativ zueinander.

11. Filtersystem nach einem der obigen Ansprüche, wobei ein Außenumfang (16) des Filterelements (10) am ersten Gehäuseteil (112) und/oder am zweiten Gehäuseteil (114) befestigt ist, insbesondere durch Kleben, Schweißen oder Klemmen.

12. Filtersystem nach einem der obigen Ansprüche, wobei das erste Filtermedium (20) und/oder das zweite Filtermedium (30) als einlagiges oder mehrlagiges Medium ausgebildet sind.

## Revendications

1. Système de filtre (100) destiné à filtrer des fluides, en particulier un système de filtre à fluides liquides, comprenant
un boîtier (110), au moins une entrée de fluide (102) formée dans une première partie de boîtier (112), au moins une sortie de fluide (104) formée dans une deuxième partie de boîtier (114),
un élément de filtre plat sans entretien (10) logé de manière opérationnelle dans le boîtier (110), un écoulement de fluide (50) traversant transversalement l'élément de filtre (10) depuis l'entrée de fluide (102) jusqu'à la sortie de fluide (104),
l'élément de filtre (10) ayant au moins deux zones de filtration (12, 14) de densités de filtration différentes, l'écoulement de fluide (50) traversant les zones de filtration (12, 14), au moins au nombre de deux, en parallèle, **caractérisé en ce que** le premier milieu filtrant (20) et le deuxième milieu filtrant (30) sont disposés côte à côte transversalement par rapport à l'écoulement de fluide (50), une première cloison (40) étant disposée dans la première partie de boîtier (112) en amont de l'élément de filtre (10) entre le premier milieu filtrant (20) et le deuxième milieu filtrant (30), et une deuxième cloison (42) étant disposée dans la deuxième partie de boîtier (114) en aval de l'élément de filtre (10), la deuxième cloison (42) étant positionnée à l'opposé de la première cloison (40), par rapport à l'élément de filtre (10), la première cloison (40) et la deuxième cloison (42) étant chacune pourvues d'au moins un canal d'écoulement (44, 46) permettant le passage du fluide entre la première et la deuxième zone de filtration (12, 14) de l'élément de filtre (10).

2. Système de filtre selon la revendication 1, une première zone de filtration (12) à haute densité de filtration étant plus grande qu'une deuxième zone de filtration (14) à faible densité de filtration,
en particulier, la première zone de filtration (12) à haute densité de filtration étant plus grande, de préférence au moins deux fois plus grande, encore plus préféré au moins trois fois plus grande, et le plus préférablement au moins quatre fois plus grande, que la deuxième zone de filtration (14) à faible densité de filtration.

3. Système de filtre selon la revendication 1 ou 2, l'élément de filtre (10) comprenant au moins un premier milieu filtrant (20) à haute densité de filtration et un deuxième milieu filtrant (30) à faible densité de filtration.

4. Système de filtre selon l'une quelconque des revendications précédentes, l'entrée de fluide (102) étant positionnée dans la première partie de boîtier (112) et la sortie de fluide (104) étant positionnée dans la deuxième partie de boîtier (114), en particulier en face de la première zone de filtration (12) à haute densité de filtration.

5. Système de filtre selon l'une quelconque des revendications précédentes, la première cloison (40) étant disposée dans la première partie de boîtier (112) et/ou la deuxième cloison (42) étant disposée dans la deuxième partie de boîtier (114), et/ou
la première cloison (40) fait partie intégrante de la première partie de boîtier (112) et/ou la deuxième cloison (42) fait partie intégrante de la deuxième partie de boîtier (114).

6. Système de filtre selon l'une quelconque des revendications précédentes, la première cloison (40) et/ou la deuxième cloison (42) étant pourvues de dispositifs de maintien (48) destinés à fixer l'élément de filtre (10), en particulier pour serrer l'élément de filtre (10) entre les cloisons (40, 42).

7. Système de filtre selon la revendication 3, le premier milieu filtrant (20) et le deuxième milieu filtrant (30) étant empilés l'un sur l'autre, le premier milieu filtrant (20) d'une densité de filtration élevée étant pourvu d'une découpe (22) destinée à exposer la deuxième zone de filtration (14) d'une faible densité de filtration à l'écoulement de fluide (50).

8. Système de filtre selon l'une quelconque des revendications précédentes, des nervures (120, 122) étant disposées sur une face intérieure (116) de la première partie de boîtier (112) et/ou sur une face intérieure (118) de la deuxième partie de boîtier (114) pour diriger l'écoulement de fluide (50) et/ou pour servir de support à l'élément de filtre (10).

9. Système de filtre selon la revendication 8, un espace intermédiaire (124, 126) étant prévu dans le sens d'écoulement (50) entre les nervures (120, 122) et l'élément de filtre (10).

10. Système de filtre selon l'une quelconque des revendications précédentes, des évidements (130) étant prévus sur une circonférence extérieure (128) de la première partie de boîtier (112) et des saillies correspondantes (134) étant prévues sur une circonférence extérieure (132) de la deuxième partie de boîtier (114) ou inversement, pour positionner la première partie de boîtier (112) et la deuxième partie de boîtier (114) l'une par rapport à l'autre,
en particulier pour assurer un positionnement « poka-yoke » de la première partie de boîtier (112) et de la deuxième partie de boîtier (114) l'une par rapport à l'autre.

11. Système de filtre selon l'une quelconque des revendications précédentes, une circonférence extérieure (16) de l'élément de filtre (10) étant fixée à la première partie de boîtier (112) et/ou à la deuxième partie de boîtier (114), en particulier par collage, soudage ou serrage.

12. Système de filtre selon l'une quelconque des revendications précédentes, le premier milieu filtrant (20) et/ou le deuxième milieu filtrant (30) étant du type à couche individuelle ou du type multicouche.
